# EUROPEAN PATENT APPLICATION

(11) **EP 4 621 086 A1**
(43) Date of publication of application: **24.09.2025**
(21) Application number: 25164498.5
(22) Date of filing: 18.03.2025
(51) Int. Cl.: C22C 9/00, H01M 4/66, H01M 10/052, C25D 3/38, C25D 7/06

(54) **COPPER FOIL, CURRENT COLLECTOR AND LITHIUM ION SECONDARY BATTERY**

(30) Priority: 19.03.2024 US 202463567212 P; 13.03.2025 CN 202510297566; 13.03.2025 TW 114109379
(71) Applicant: Chang Chun Petrochemical Co., Ltd., 104 Taipei City (TW)
(72) Inventor: CHIU, Sheng-Han, 104 Taipei City (TW); CHENG, Kuei-Sen, 104 Taipei City (TW)
(74) Representative: Gill Jennings & Every LLP

(57) **Abstract**

A copper foil is provided, including 5 ppm to 25 ppm silver, 0.5 ppm to 8 ppm titanium, and 5 ppm to 85 ppm sulfur. Also provided are a current collector for a lithium ion secondary battery and a lithium ion secondary battery.

## Description

### BACKGROUND

### 1. Technical Field

The present disclosure relates to a copper foil, which has a wide range of uses and is particularly suitable for use in lithium ion secondary batteries.

### 2. Description of Associated Art

Lithium ion secondary batteries are widely used in various portable electronic devices (such as mobile phones, laptops, tablets, and cameras), electric vehicles, and energy storage systems due to their characteristics including small size, high energy density, long lifetime, rapid charging, less memory effects, and low cost, making them indispensable in modern life. To obtain higher energy density and achieve large energy with a small volume, technology for improving the performance of lithium ion secondary batteries is continuously evolving and innovating.

In lithium ion secondary batteries, copper foil can serve as a negative current collector material since it is a good electrical conductor. However, the reliability and lifetime of the battery will be affected if the copper foil has poor mechanical properties and becomes relaxed, or develops wrinkles after being coated with, for example, a carbon-based or silicon-based active material, or develops cracks due to failure to bear the thermal expansion and contraction of the lithium ion secondary battery during the charge-discharge cycles. Therefore, there is a need for improvements in a copper foil for lithium ion secondary batteries to meet these requirements.

### SUMMARY

Given the above, the present disclosure provides a copper foil with good electrical conductivity, resistance to relaxation, and reduced tendency to develop wrinkles after being coated with, for example, active materials. Additionally, when applied to lithium ion secondary batteries, the copper foil disclosed herein can withstand the thermal expansion and contraction during charge-discharge cycles, and is not prone to developing cracks.

The copper foil of the present disclosure comprises 5 ppm to 25 ppm of silver, 0.5 ppm to 8 ppm of titanium and 5 ppm to 85 ppm of sulfur.

In an embodiment, the copper foil comprises 5 ppm to 20 ppm of silver. In another embodiment, the copper foil comprises 0.5 ppm to 5 ppm of titanium. In still another embodiment, the copper foil contains 5 ppm to 70 ppm of sulfur.

In an embodiment, the copper foil has a tensile strength ranging from 45 kg/mm² to 85 kg/mm². In another embodiment, the copper foil has a tensile strength ranging from 60 kg/mm² to 80 kg/mm².

In an embodiment, the copper foil has an electrical conductivity of 80% International Annealed Copper Standard (IACS) or more.

In an embodiment, the copper foil has a first surface and an opposite second surface, and the first and second surfaces of the copper foil respectively have a ten-point mean roughness (Rz) of 2.5 µm or less.

In an embodiment, the copper foil has an elongation of 1% to 15%.

In an embodiment, the copper foil has a thickness of 3 µm to 35 µm.

In an embodiment, the copper foil comprises a copper layer and a treatment layer.

In an embodiment, the treatment layer of the copper foil is formed on at least one surface of the copper layer, and the treatment layer is formed from an organic material or an inorganic material.

In an embodiment, the inorganic material comprises at least one selected from the group consisting of chromium, nickel, zinc, cobalt, manganese, and tin.

In an embodiment, the organic material comprises at least one selected from the group consisting of carbon, oxygen, nitrogen, sulfur, and silicon.

In an embodiment, the organic material comprises at least one selected from the group consisting of porphyrin compounds, silane compounds, benzotriazole compounds, and triazine trithiol compounds.

The present disclosure further provides a current collector for a lithium ion secondary battery, which comprises the copper foil described herein.

The present disclosure further provides a lithium ion secondary battery, which comprises the current collector described herein.

In the present disclosure, by controlling mainly the content of non-copper elements in the copper foil, specifically silver, titanium, and sulfur, the copper foil exhibits excellent electrical conductivity and mechanical properties. In the present disclosure, the tensile strength of the copper foil is also controlled within a specific range to further improve the performance of the copper foil. With the technical methods described herein, the copper foil has good electrical conductivity, resistance to relaxation, and a reduced tendency to develop wrinkles after being coated with, for example, active materials. Additionally, it is further found that, when applied to lithium ion secondary batteries, the copper foil disclosed herein can withstand the thermal expansion and contraction during charge-discharge cycles and is not prone to developing cracks.

The foregoing summary is not intended to represent every specific embodiment or aspect of the present disclosure. Rather, it merely provides examples of the novel aspects and features described herein.

### DETAILED DESCRIPTION OF THE PREFERRED EMBODIMENTS

The implementation of the present disclosure will be illustrated by the following specific embodiments, one having ordinary skill in the art can readily realize other advantages and effects of the present disclosure from the content described herein.

It should be noted that, all ranges and values mentioned herein are inclusive and combinable. If a numerical range is provided, every value within the upper and lower limits of the range, including the upper and lower limits themselves, is considered disclosed herein. It should be understood that any numerical range cited herein is intended to include all subranges encompassed within the range. For example, a range of "1 to 10" is intended to include all subranges ranging from the minimum value 1 to the maximum value 10 recited and to include the minimum and maximum value; in other words, a minimum value equal to or larger than 1 and a maximum value equal to or smaller than 10. Since the disclosed numerical ranges are consecutive, every value between the minimum value and the maximum value is included.

Unless stated otherwise, "comprising," "containing," "including" or "having" particular elements used herein means that other elements such as units, components, structures, regions, parts, devices, systems, steps and connection relationships can be also included rather than excluded. That is, a statement that the claimed invention "comprises," "includes," "contains" or "has" particular elements actually allows for the presence of other unspecified elements, whether necessary or not.

The terms "upper" and "lower" mentioned herein are merely used for convenience in illustrating specific embodiments of the present invention instead of limiting the range capable of being performed by the present invention. Adjustments, exchanges and alternations of their relative positions should be considered within the range capable of being performed by the present invention as long as they do not substantially alter the technical content of the present invention.

The singular forms "a/an" and "the" described herein also include plural forms, and the term "or" is interchangeable with "and/or" unless otherwise explicitly stated.

A first aspect of the present disclosure provides a copper foil consisting essentially of copper (e.g., containing >99.5 wt% of copper, preferably containing >99.9 wt% of copper) and containing trace amounts of non-copper elements. In some embodiments, a copper foil may be prepared by electrolysis (i.e., as an electrolytic copper foil), and during the electrolysis process, non-copper elements in the electrolytic solution may be precipitated along with copper or be added on the copper foil by attachment, deposition, etc., thus making the copper foil contain trace amounts of non-copper elements. In the present disclosure, by controlling trace amounts of non-copper elements, the copper foil contains 5 ppm to 25 ppm of silver, 0.5 ppm to 8 ppm of titanium, and 5 ppm to 85 ppm of sulfur.

The copper foil of the present disclosure contains 5 ppm to 25 ppm of silver, preferably 5 ppm to 20 ppm of silver, for example, 5 ppm, 5.5 ppm, 6 ppm, 6.5 ppm, 7 ppm, 7.5 ppm, 8 ppm, 8.5 ppm, 9 ppm, 9.5 ppm, 10 ppm, 11 ppm, 12 ppm, 13 ppm, 14 ppm, 15 ppm, 16 ppm, 17 ppm, 18 ppm, 19 ppm, 20 ppm, 21 ppm, 22 ppm, 23 ppm, 24 ppm, or 25 ppm of silver. The copper foil of the present disclosure contains 0.5 ppm to 8 ppm of titanium, preferably 0.5 ppm to 5 ppm of titanium, for example, 0.5 ppm, 1 ppm, 1.5 ppm, 2 ppm, 2.5 ppm, 3 ppm, 3.5 ppm, 4 ppm, 4.5 ppm, 5 ppm, 5.5 ppm, 6 ppm, 6.5 ppm, 7 ppm, 7.5 ppm, or 8 ppm of titanium. The copper foil of the present disclosure contains 5 ppm to 85 ppm of sulfur, preferably 5 ppm to 70 ppm of sulfur, for example, 5 ppm, 6 ppm, 7 ppm, 8 ppm, 9 ppm, 10 ppm, 15 ppm, 20 ppm, 25 ppm, 30 ppm, 35 ppm, 40 ppm, 45 ppm, 50 ppm, 55 ppm, 60 ppm, 65 ppm, 70 ppm, 75 ppm, 80 ppm, or 85 ppm of sulfur.

In addition to controlling the content of non-copper elements in the copper foil, the tensile strength is also monitored in the present disclosure. The copper foil of the present disclosure is controlled to have a tensile strength ranging from 45 kg/mm² to 85 kg/mm², preferably to have a tensile strength ranging from 60 kg/mm² to 80 kg/mm². In some embodiments, the tensile strength refers to a tensile strength in the transverse direction (TD). The tensile strength ranging from 45 kg/mm² to 85 kg/mm² is, e.g., 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, or 85 kg/mm².

In some embodiments, the electrical conductivity of the copper foil is tested and the result is 80% IACS or more, for example, 80% IACS, 81% IACS, 82% IACS, 83% IACS, 84% IACS, 85% IACS, 86% IACS, 87% IACS, 88% IACS, 89% IACS, or 90% IACS.

In some embodiments, the copper foil has a first surface and an opposite second surface, and the first and second surfaces of the copper foil respectively have ten-point mean roughness, Rz, of 2.5 µm or less, preferably 2.0 µm or less, e.g., 2.5 µm, 2.4 µm, 2.3 µm, 2.2 µm, 2.1 µm, 2.0 µm, 1.9 µm, 1.8 µm, 1.7 µm, 1.6 µm, 1.5 µm, 1.4 µm, 1.3 µm, 1.2 µm, 1.1 µm, or 1.0 µm.

In some embodiments, the copper foil may have a thickness of 3 µm to 35 µm.In some specific application or taking the desired mechanical performance into account, the copper foil may have a thickness of 3 µm to 10 µm.The copper foil has a thickness of, e.g., 3 µm, 4 µm, 5 µm, 6 µm, 7 µm, 8 µm, 9 µm, 10 µm, 15 µm, 20 µm, 25 µm, 30 µm, or 35 µm.

The preparation of the copper foil of the present disclosure is illustrated below. In some embodiments, the copper foil may be prepared by electrolysis. The electrolytic copper foil may be prepared using a foil-making machine through electrolysis (also referred as electro-deposition, electrolytic deposition, or electro-plating). The foil-making machine may include at least a rolling drum as a cathode, a pair of insoluble metal anode plates, and an electrolytic solution feeding pipe. The rolling drum is a rotatable metal drum with a mirror-polished surface. The metal anode plates are fixedly and separately positioned around the lower half portion of the rolling drum and surround it. The feeding pipe is fixed directly below the rolling drum and positioned between the two metal anode plates. The side of the electrolytic copper foil in contact with the drum used during the electro-deposition process is referred to as the drum side; while the opposite side, or the side in contact with the electrolyte during the electro-deposition process is referred to as the deposition side. The method of manufacturing a copper foil comprises immersing the rotating rolling drum assembly partially into an electrolytic solution containing copper ions and ions of non-copper elements; under the influence of an electric current, the ions are attracted to the rolling drum, where they are reduced and deposited onto its surface; and a copper foil (i.e., an electrolytic copper foil) is thus formed on the surface of the rolling drum. In a continuous process, the rolling drum rotates and the electrolytic copper foil thereon is transferred away, and a new electrolytic copper foil is formed on the surface of the rolling drum where no electrolytic copper foil is present. Said "transferred away" means, for example, being drawing with an external force to be released from the rolling drum and then passing through the downstream rollers. In some embodiments, the drum side is equivalent to the first surface, and the deposition side is equivalent to the second surface.

In addition to the main copper ions, the electrolyte also contains an additive. In an embodiment, the additive may be an inorganic additive and/or an organic additive, for example, a silver-containing additive, a titanium-containing additive, a sulfur-containing additive, and other additives. In an embodiment, the silver-containing additive is, for example, but not limited to, a silver salt such as silver nitrate, silver sulfate, or silver chloride; the titanium-containing additive is, for example, but not limited to, a titanium salt such as titanium sulfate; and the sulfur-containing additive is, for example, but not limited to, thiourea, ethylene thiourea, 3-S-isothiuronium propyl sulfonate (UPS), bis-(sodium sulfopropyl)-disulfide (SPS), or sodium 3-mercapto-1-propanesulfonate (MPS). In an embodiment, the other additives may be, for example, polymers such as gelatin, polyethylene glycol, cellulose-based water-soluble polymer, polyethyleneimine, or polyacrylamide, and a decomposition product of the polymer aforementioned such as the decomposition product of gelatin may also be added as an additive. The decomposition product of the polymer may be prepared by decomposition of the polymer aforementioned through electrolysis. For example, the decomposition product of the polymer may be obtained by performing electrolysis at a current density of 5 A/dm² to 30 A/dm² for 8 to 15 seconds in a system with a titanium plate as a positive electrode, a copper plate as a negative electrode, an aqueous solution containing a polymer of 10 g/L to 50 g/L, and an adjuvant (e.g., sodium thiosulfate, potassium sulfide, etc.) of 0 g/L to 50 g/L. The polymer has a weight average molecular weight (Mw) of 20,000 to 100,000, and the decomposition product thereof has a weight average molecular weight (Mw) of 6,000 to 30,000, which may be adjusted as needed.

In an embodiment, when the copper foil is prepared by electrolysis, the composition and properties of the copper foil can be controlled by regulating the composition of an electrolytic solution (e.g., the concentration of copper ions, non-copper ions, and other substances) and various operating parameters (e.g., current density, temperature of the electrolytic solution, process time, etc.) during electrolysis. In an embodiment, as a means for regulating the content of non-copper elements in a copper foil, for example, regulating the composition of an electrolytic solution is mentioned. In this regard, various components in the electrolytic solution may be regulated. For example, when the composition of the electrolytic solution comprises copper sulfate, sulfuric acid, chloride ions and additives, the concentrations of these components may be regulated to control the content of non-copper elements in the electrolytic copper foil. In another embodiment, it can be regulated to comprise copper sulfate (CuSO₄·5H₂O) at a concentration of 200 g/L to 400 g/L, sulfuric acid at a concentration of 80 g/L to 150 g/L, chloride ions at a concentration of 20 ppm to 100 ppm, and an additive at a concentration of 10 ppm to 300 ppm. In still another embodiment, a means for further regulating the contents of non-copper elements in the electrolytic copper foil can be, in an exemplary way, regulating the concentration of the additive.

It is shown in the present disclosure that regulating the contents of the non-copper elements in the copper foil improves the performance of the copper foil. For example, wrinkles developed during processing can be reduced by regulating the silver content at 5-25 ppm and the sulfur content at 5-85 ppm, otherwise wrinkles will be generated to make the copper foil uneven and not conducive to application. In particular, when there is coating material on the surface of the copper foil, wrinkles will cause insufficient contact between the copper foil and the coating material, increasing the risk of peeling off. For another example, regulating the titanium content at 0.5-8 ppm can avoid the relaxation of the copper foil, but not vice versa. In addition, it is also shown in the present disclosure that regulating the contents of silver, titanium, and sulfur described above can significantly reduce the cracks generated after charge-discharge cycles in the application of lithium ion secondary batteries. It is presumed in the present disclosure that a silver content and sulfur content of 5 ppm or less may result in poor profile or mechanical properties of the copper foil, which may further lead to wrinkles during processing; and a titanium content of 0.5 ppm or less may result in poor mechanical properties of the copper foil. Also, since non-copper elements such as silver, titanium, and sulfur are generally present at the grain boundaries of the copper foil, it is accordingly presumed that the excessive amounts of these elements will weaken the crystallinity and make the copper foil brittle. Additionally, if silver content or titanium content is too high, the electrical conductivity will be reduced.

In some embodiments, the copper foil may comprise a multilayer structure, for example, comprise a copper layer and a treatment layer. In some embodiments, the treatment layer is a layer formed on the copper layer by subjecting the copper layer to further treatment. In some embodiments, the treatment layer is formed on at least one surface of the copper layer. When the copper layer is prepared by electrolysis, said surface can be a drum side or a deposition side. The treatment layer can protect the copper layer from external factors, such as oxidation or corrosion which can lead to the deterioration of the copper foil. The treatment layer is, e.g., a rust-proof treatment layer. The treatment layer may be prepared by any known method, including immersing the copper layer in or passing it through a solution containing a material to be the treatment layer, or plating (e.g., by an electro-plating bath) a material to be the treatment layer on the copper layer. Such a treatment process may be continuous and a part of the entire process for the preparation of a surface-treated copper foil. The treatment layer can have a thickness of about 0.2 nm to about 100 nm.

In some embodiments, the treatment layer is formed from an organic material or an inorganic material. In some embodiments, the inorganic material comprises at least one selected from the group consisting of chromium, nickel, zinc, cobalt, manganese, and tin. In some embodiments, the organic material comprises at least one selected from the group consisting of carbon, oxygen, nitrogen, sulfur, and silicon. In some embodiments, the organic material is at least one selected from the group consisting of porphyrin compounds, silane compounds, benzotriazole compounds, and triazine trithiol compounds.

In some embodiments, a rust-proof solution may be a chromium-containing rust-proof treatment solution, whose main component is chromium trioxide (CrO₃) and its concentration may be 1.5 g/L to 5.0 g/L. The rust-proof treatment may be performed at a temperature of 20°C to 40°C, a current density of 0.5 A/dm² to 6.0 A/dm², and for 2-4 seconds, but not limited thereto.

A second aspect of the present disclosure provides a current collector for lithium ion secondary battery, comprising the copper foil described herein.

At least one layer of an active material is coated on at least one side of the copper foil of the present disclosure to prepare a current collector and an electrode of a lithium ion secondary battery. The current collector may be a positive electrode current collector and/or a negative electrode current collector, and the electrode may be n positive electrode and/or a negative electrode. The active material may be positive electrode active material and negative electrode active material. The negative electrode active material contains a negative electrode active substance which may be a carbon-containing substance, a silicon-containing substance, a silicon-carbon composite, a metal, a metal oxide, a metal alloy, or a polymer, preferably a carbon-containing substance or a silicon-containing substance, but not limited thereto. In particular, the carbon-containing material may be mesophase graphite powder (MGP), non-graphitizing carbon, coke, graphite, glass-like carbon, carbon fiber, activated carbon, carbon black, or calcined polymer, but not limited thereto. Among these, the coke includes pitch coke, needle-like coke, petroleum coke, etc.; and the calcined polymer is obtained by calcining a polymer such as phenolic resin or furan resin at an appropriate temperature for carbonation. The silicon-containing substance has an excellent ability to form alloys with lithium ions and an excellent ability to extract lithium ions from alloy lithium, and when used in lithium ion secondary batteries, the silicon-containing substance can achieve the advantage of high energy density. The silicon-containing substance may be used in combination with cobalt, iron, tin, nickel, copper, manganese, zinc, indium, silver, titanium, germanium, bismuth, antimony, chromium, ruthenium, molybdenum, or a combination thereof, to form an alloy material. The elements of metal or metal alloy may be selected from the group consisting of cobalt, iron, tin, nickel, copper, manganese, zinc, indium, silver, titanium, germanium, bismuth, antimony, chromium, ruthenium, and molybdenum, but not limited thereto. The examples of the metal oxide are iron(III) oxide, iron(II) diiron (III) oxide, ruthenium(IV) dioxide, molybdenum(IV) dioxide, and molybdenum(VI) oxide, but not limited thereto. The examples of the polymer are polyacetylene and polypyrrole, but not limited thereto.

The active material may be added with an adjuvant additive as needed, and the adjuvant additive may be binder and/or weak acid reagent, but not limited thereto. For example, the binder may be polyvinylidene difluoride, styrene-butadiene rubber, carboxymethyl cellulose, polyacrylic acid, polyacrylonitrile, or polyacrylate, and the weak acid reagent may be oxalic acid, citric acid, lactic acid, acetic acid, or formic acid.

A third aspect of the present disclosure provides a lithium ion secondary battery, comprising the current collector described herein.

According to the present disclosure, the lithium ion secondary battery may be a LiCoO₂ battery, a LiNiO₂ battery, a LiMn₂O₄ battery, a LiCoxNi₁-XO₂ battery, a LiFePO₄ battery, or the like based on the composition of a positive electrode slurry, but not limited thereto.

According to the present disclosure, the lithium ion secondary battery comprises an electrolytic solution comprising a solvent, an electrolyte, and an optional additive. The solvent in the electrolytic solution includes a non-aqueous solvent, e.g., a cyclic carbonate such as ethylene carbonate or propylene carbonate; a linear carbonate such as dimethyl carbonate, diethyl carbonate, or methyl ethyl carbonate; or a sultone, but not limited thereto. The solvent aforementioned can be used alone or in combination of two or more solvents. The electrolyte includes lithium hexafluorophosphate, lithium perchlorate, lithium tetrafluoroborate, lithium trifluoromethylsulfonate, lithium borate bioxate, and lithium bis-trifluoromethylsulfoiminate, but not limited thereto.

In an embodiment, the lithium ion secondary battery may employ a solid electrolyte instead of the electrolytic solution described above. For example, the solid electrolyte may be crystalline electrolyte, glass electrolyte, or glass-ceramic electrolyte, or polymeric electrolyte, but not limited thereto. Specifically, the crystalline electrolyte may be a sulfide solid electrolyte such as lithium superionic conductor (LISICON) type or argyrodite type; or an oxide solid electrolyte such as garnet type, peroskite type, NASICON type, etc., but not limited thereto. The glass-state electrolyte may be such as an oxide glass-state electrolyte or a sulfide glass-state electrolyte, but not limited thereto. The polymer electrolyte may be a pure polymer solid electrolyte such as polyethylene oxide-based (PEO-based), polypropylene oxide-based (PPO-based), etc.; or a colloidal polymer electrolyte such as polyacrylonitrile-based (PAN-based), poly(methyl methacrylate)-based (PMMA-based), poly(vinyl chloride)-based (PVC-based), poly(vinylidene fluoride)-based (PVDF-based), etc., but not limited thereto.

According to the present disclosure, the lithium ion secondary battery may be a laminated lithium ion secondary battery containing a negative electrode and a positive electrode laminated with a separator membrane therebetween, and also be a spiral-winding laminated lithium ion secondary battery containing continuous electrodes and a separator membrane rolled up together, but not limited thereto. Depending on different applications, the lithium ion secondary battery of the present disclosure in a personal laptop, a mobile phone, an electric vehicle, or an energy storage system can be processed into, for example, a cylindrical secondary battery, a prismatic secondary battery, a pouch secondary battery, or a button secondary battery, but not limited thereto.

The details will be illustrated more specifically further through the following examples. However, the interpretation of the present disclosure should not be limited to the descriptions of the following examples. It should be understood that within the scope of the present disclosure, the technical features (such as those in the embodiments) mentioned above and below can be freely and mutually combined to form new or improved technical solutions, which will not be redundantly described for the sake of brevity.

### EXAMPLES

A copper-containing electrolytic solution was formulated with the following materials, and a cathode titanium rolling drum was rotated at a constant rate and contacted with the copper-containing electrolytic solution. The current was applied to the cathode titanium rolling drum and an insoluble anode plate (i.e., as shown in the electro-deposition condition below), allowing the copper-containing electrolytic solution to be deposited on the surface of the cathode titanium rolling drum to form an electrolytic copper foil. The electrolytic copper foil was then peeled off and directed to a series of rollers.

### [Formulation of copper-containing electrolytic solution]

Copper sulfate (CuSO₄·5H₂O): 320 g/L
Sulfuric acid: 85 g/L
Chlorine ions: 77 ppm
[Electrolysis condition]
Temperature: 48°C
Current density: 44 A/dm²
Thickness of electrolytic copper foil: 4 µm - 10 µm

Then, the electrolytic copper foil was delivered via a series of rollers to a rust-proof treatment device. The electrolytic copper foil was immersed in a rust-proof treatment cell filled with a rust-proof treatment solution, and a rust-proof layer was formed on the electrolytic copper foil by two sets of electrode plates.

### [Formulation of rust-proof treatment solution]

Chromium trioxide (CrO₃): 1.5 g/L
[Rust-proof treatment condition]
Temperature: 25°C
Current density: 0.5 A/dm²
Electroplating time: 2 seconds

After the rust-proof treatment, the rust-proof treated electrolytic copper foil was directed further to a series of rollers, where excess rust-proof treatment solution and other materials on the surface were removed with air knives to dry the copper foil, and the electrolytic copper foil copper foil was rolled up to obtain a final product.

### Example 1

The copper-containing electrolytic solution comprised, as described above, 320 g/L of copper sulfate, 85 g/L of sulfuric acid, and 77 ppm of chloride ions, and further comprised the following additives: 20 ppm of gelatin (Mw of 40,000 to 60,000, purchased from Koei Chemical Co., Ltd.), 10 ppm of the decomposition product of gelatin (Mw of 12,000 to 16,000), 2 ppm of thiourea, 12 ppm of silver nitrate, and 2.5 ppm of titanium sulfate. The decomposition product of gelatin was prepared as follows: adding gelatin and sodium thiosulfate into water and mixing to formulate an aqueous solution containing 20 g/L of gelatin and 20 g/L of sodium thiosulfate, and performing electrolysis used a titanium plate as a positive electrode and a copper plate as a negative electrode at a current density of 20 A/dm² for 10 seconds, to generate an aqueous solution containing small molecular decomposition products of gelatin. An appropriate amount of the aqueous solution aforementioned was added to the copper-containing electrolytic solution, wherein the content of the decomposition product of gelatin was based on the entity of the copper-containing electrolytic solution. An electrolytic copper foil was formed on the surface of the rolling drum from the copper-containing electrolytic solution under the condition described above, and it was served as a copper layer. A rust-proof treatment was then performed to form rust-proof layers on two surfaces of the electrolytic copper foil. An electrolytic copper foil with a thickness of 6 µm was finally yielded after removing excess rust-proof treatment solution and other materials and drying.

### Example 2

A copper-containing electrolytic solution was prepared according to Example 1, by altering silver nitrate to 35 ppm and titanium sulfate to 10 ppm. Further, an electrolytic copper foil with a thickness of 6 µm and having rust-proof layers on two sides was formed from the copper-containing electrolytic solution according to Example 1.

### Example 3

A copper-containing electrolytic solution was prepared according to Example 1, by altering silver nitrate to 45 ppm and titanium sulfate to 15 ppm. Further, an electrolytic copper foil with a thickness of 6 µm and having rust-proof layers on two sides was formed from the copper-containing electrolytic solution according to Example 1.

### Example 4

A copper-containing electrolytic solution was prepared according to Example 1, by altering gelatin concentration to 24 ppm and the decomposition product of gelatin to 6 ppm. Further, an electrolytic copper foil with a thickness of 6 µm and having rust-proof layers on two sides was formed from the copper-containing electrolytic solution according to Example 1.

### Example 5

A copper-containing electrolytic solution was prepared according to Example 1, by altering gelatin concentration to 24 ppm, the decomposition product of gelatin to 6 ppm, silver nitrate to 35 ppm and titanium sulfate to 10 ppm. Further, an electrolytic copper foil with a thickness of 6 µm and having rust-proof layers on two sides was formed from the copper-containing electrolytic solution according to Example 1.

### Example 6

A copper-containing electrolytic solution was prepared according to Example 1, by altering gelatin concentration to 24 ppm, the decomposition product of gelatin to 6 ppm, silver nitrate to 45 ppm and titanium to 15 ppm. Further, an electrolytic copper foil with a thickness of 6 µm and having rust-proof layers on two sides was formed from the copper-containing electrolytic solution according to Example 1.

### Example 7

A copper-containing electrolytic solution was prepared according to Example 1, by altering gelatin concentration to 24 ppm, the decomposition product of gelatin 6 ppm, thiourea to 4 ppm, silver nitrate to 45 ppm and titanium sulfate to 15 ppm. Further, an electrolytic copper foil with a thickness of 6 µm and having rust-proof layers on two sides was formed from the copper-containing electrolytic solution according to Example 1.

### Example 8

A copper-containing electrolytic solution was prepared according to Example 1, by altering thiourea concentration to 1 ppm, silver nitrate concentration to 35 ppm and titanium sulfate concentration to 10 ppm. Further, an electrolytic copper foil with a thickness of 6 µm and having rust-proof layers on two sides was formed from the copper-containing electrolytic solution according to Example 1.

### Example 9

A copper-containing electrolytic solution was prepared according to Example 1, by altering gelatin concentration to 24 ppm, the decomposition product of gelatin to 6 ppm, silver nitrate to 35 ppm and titanium sulfate to 10 ppm. Further, an electrolytic copper foil with a thickness of 4 µm and having rust-proof layers on two sides was formed from the copper-containing electrolytic solution according to Example 1.

### Example 10

A copper-containing electrolytic solution was prepared according to Example 1, by altering gelatin concentration to 24 ppm, the decomposition product of gelatin to 6 ppm, silver nitrate to 35 ppm and titanium sulfate to 10 ppm. Further, an electrolytic copper foil with a thickness of 10 µm and having rust-proof layers on two sides was formed from the copper-containing electrolytic solution according to Example 1.

### Example 11

A copper-containing electrolytic solution was prepared according to Example 1, by altering gelatin concentration to 30 ppm, silver nitrate concentration to 35 ppm, titanium sulfate concentration to 10 ppm, and not adding the decomposition product of gelatin. Further, an electrolytic copper foil with a thickness of 6 µm and having rust-proof layers on two sides was formed from the copper-containing electrolytic solution according to Example 1.

### Example 12

A copper-containing electrolytic solution was prepared according to Example 1, by altering gelatin concentration to 30 ppm, silver nitrate concentration to 55 ppm, titanium sulfate concentration to 25 ppm, and not adding the decomposition product of gelatin. Further, an electrolytic copper foil with a thickness of 6 µm and having rust-proof layers on two sides was formed from the copper-containing electrolytic solution according to Example 1.

### Example 13

A copper-containing electrolytic solution was prepared according to Example 1, by altering silver nitrate concentration to 50 ppm and titanium sulfate concentration to 20 ppm. Further, an electrolytic copper foil with a thickness of 6 µm and having rust-proof layers on two sides was formed from the copper-containing electrolytic solution according to Example 1.

### Example 14

A copper-containing electrolytic solution was prepared according to Example 1, by altering gelatin concentration to 24 ppm, the decomposition product of gelatin to 6 ppm, silver nitrate to 50 ppm and titanium to 20 ppm. Further, an electrolytic copper foil with a thickness of 6 µm and having rust-proof layers on two sides was formed from the copper-containing electrolytic solution according to Example 1.

### Example 15

A copper-containing electrolytic solution was prepared according to Example 1, by altering thiourea concentration to 5 ppm, silver nitrate concentration to 35 ppm and titanium sulfate concentration to 10 ppm. Further, an electrolytic copper foil with a thickness of 6 µm and having rust-proof layers on two sides was formed from the copper-containing electrolytic solution according to Example 1.

### Comparative Example 1

A copper-containing electrolytic solution was prepared according to Example 1, by altering silver nitrate concentration to 10 ppm and titanium sulfate concentration to 2 ppm. Further, an electrolytic copper foil with a thickness of 6 µm and having rust-proof layers on two sides was formed from the copper-containing electrolytic solution according to Example 1.

### Comparative Example 2

A copper-containing electrolytic solution was prepared according to Example 1, by altering gelatin concentration to 24 ppm, the decomposition product of gelatin to 6 ppm, silver nitrate to 10 ppm and titanium to 2 ppm. Further, an electrolytic copper foil with a thickness of 6 µm and having rust-proof layers on two sides was formed from the copper-containing electrolytic solution according to Example 1.

### Comparative Example 3

A copper-containing electrolytic solution was prepared according to Example 1, by omitting silver nitrate and titanium sulfate. Further, an electrolytic copper foil with a thickness of 6 µm and having rust-proof layers on two sides was formed from the copper-containing electrolytic solution according to Example 1.

### Comparative Example 4

A copper-containing electrolytic solution was prepared according to Example 1, by altering gelatin concentration to 24 ppm, the decomposition product of gelatin to 6 ppm, and not adding silver nitrate and titanium sulfate, and was further processed into an electrolytic copper foil with a thickness of 6 µm and having rust-proof layers on two sides according to Example 1.

### Comparative Example 5

A copper-containing electrolytic solution was prepared according to Example 1, by altering silver nitrate concentration to 35 ppm and not adding titanium sulfate. Further, an electrolytic copper foil with a thickness of 6 µm and having rust-proof layers on two sides was formed from the copper-containing electrolytic solution according to Example 1.

### Comparative Example 6

A copper-containing electrolytic solution was prepared according to Example 1, by omitting silver nitrate and altering titanium sulfate to 10 ppm. Further, an electrolytic copper foil with a thickness of 6 µm and having rust-proof layers on two sides was formed from the copper-containing electrolytic solution according to Example 1.

### Comparative Example 7

A copper-containing electrolytic solution was prepared according to Example 1, by altering gelatin concentration to 30 ppm, silver nitrate concentration to 5 ppm, titanium sulfate concentration to 1 ppm, and not adding the decomposition product of gelatin. Further, an electrolytic copper foil with a thickness of 6 µm and having rust-proof layers on two sides was formed from the copper-containing electrolytic solution according to Example 1.

### Comparative Example 8

A copper-containing electrolytic solution was prepared according to Example 1, by altering gelatin concentration to 24 ppm, the decomposition product of gelatin to 6 ppm, silver nitrate to 100 ppm, and titanium to 40 ppm. Further, an electrolytic copper foil with a thickness of 6 µm and having rust-proof layers on two sides was formed from the copper-containing electrolytic solution according to Example 1.

### Comparative Example 9

A copper-containing electrolytic solution was prepared according to Example 1, by omitting thiourea and altering silver nitrate to 35 ppm and titanium sulfate to 10 ppm. Further, an electrolytic copper foil with a thickness of 6 µm and having rust-proof layers on two sides was formed from the copper-containing electrolytic solution according to Example 1.

### Test and assessment Methods

### (I) Metal content analysis

50 mL of 30% nitric acid was formulated and taken into a 250 mL of PFA bottle. 5.4 g of the electrolytic copper foil sample was added into the bottle, and 85 mL of deionized water was further added after complete dissolution to yield a sample solution with a total volume of 135 mL. The concentration of non-copper metals (silver and titanium in Examples shown below) in the sample solution was assayed using an inductively coupled plasma optical emission spectrometer (Mode: Thermo Scientific iCAP 7400 ICP-OES), with the measured values being expressed in "mg of metal per 1 L of sample solution". Since 135 mL of the sample solution actually contained 5.4 g of the electrolytic copper foil sample, 1 L of the sample solution contains 40 g of the electrolytic copper foil sample. That is, the unit of the measured values "mg of metal per 1 L of sample solution" was equal to "mg metal per 40 g of the electrolytic copper foil sample", which was in turn converted to "mg metal * 25 / 1 kg of the electrolytic copper foil sample", i.e., ppm.

### (II) Sulfur content analysis

First, a ceramic crucible was baked at 1350°C for 15 minutes, and then 1 g of the electrolytic copper foil sample and 1 g of flux (Copper Metal Accelerator, CAS No. 7440-50-8, manufacture by LECO Corporation) were placed into the ceramic crucible. The ceramic crucible was transferred to an autosampler of a sulfur analyzer (Mode: LECO S744) for sampling and analysis. The measured values were expressed in %, which can be multiplied by 10,000 to give a sulfur content in ppm.

### (III) Tensile strength

Standard: IPC-TM-650
Instrument: Tensile Test Mode AG-I, manufactured by SHIMADZU
Specimen size: 100 mm length × 12.7 mm width
Test temperature: 25°C
Clamp distance: 50 mm
Tensile speed: 50 mm/min (along TD)

### (IV) Relaxation level

The electrolytic copper foil sample with a width of 1,380 mm was delivered into a slitting machine and positioned between two fixed guide rollers that are horizontally aligned and spaced 700 mm apart. Then, the guide rollers were rotated to apply different levels of tension to the electrolytic copper foil sample. Subsequently, the appearance of the electrolytic copper foil sample was visually inspected and its occurrence of relaxation and degree thereof were evaluated according to Table 1 below. The appearance of the electrolytic copper foil sample was first visually inspected without applying tension. If the sample appeared no relaxation, the relaxation level was graded as "0." If the sample showed a relaxed appearance, additional tension was applied and the relaxation level was re-evaluated according to the new appearance. In case that 5 kg of tension was applied and the appearance showed no relaxation, the relaxation level was graded as "1," indicating a slight relaxation. In contrast, if the sample maintained its relaxed appearance, it was subjected to increased tension of 10 kg. In case that 10 kg of tension was applied and the appearance showed unrelaxed, the relaxation level was graded as "2," indicating a moderate relaxation. If the sample still maintained its relaxed appearance, the relaxation level was graded as "3," indicating severe relaxation.

**Table 1**

| Tension applied (kg) | Appearance of the copper foil after applying tension | Relaxation level |
|---|---|---|
| 0 | No relaxation | 0 (Good) |
| 5 | No relaxation | 1 (Slight) |
| 10 | No relaxation | 2 (Moderate) |
| 10 | Relaxation | 3 (Severe) |

### (V) Wrinkles level

A negative electrode slurry was prepared from water as a solvent and negative electrode materials in Table 2 below in a solid-liquid ratio of 73 wt% (100 g of negative electrode materials: 73 g of water). The negative electrode slurry was coated on the surface of the electrolytic copper foil sample at a rate of 5 m/min to obtain a 30 µm thick layer, then baked in an oven at 160°C, rolled with a rolling machine (in which the roller was made of high carbon chromium bearing steel (SUJ2)) at a rate of 1 m/min and a pressure of 3000 psi. Afterwards, visual inspection for wrinkles was performed. It was labeled as "A" if there was no wrinkles at the interface between the negative electrode material and the electrolytic copper foil sample; it was labeled as "B" if the width of wrinkled area exceeded 0% but less than or equal to 10% of the total width of the copper foil; and it was labeled as "C" if the width of wrinkled area exceeded 10% of the total width of the copper foil.

**Table 2**

| Formulation of the negative electrode slurry | (Based on the total weight) |
|---|---|
| Active substance of the negative electrode: Mesophase Graphite Powder Anode (MGPA) | 95 wt% |
| Conductive aid: conductive carbon powder (Super P^{®}) | 1 wt% |
| Tackifier: carboxymethylcellulose (CMC) | 1.6 wt% |
| Aqueous adhesive: styrene butadiene rubber (SBR) | 2.4 wt% |

### (VI) Electrical conductivity

The electrical conductivity was measured using an instrument of Mode YOKOGAWA 2752 Double Bridge as per the ASTM B193-16 criterion.

The results of silver contents, titanium contents, sulfur contents, tensile strengths, relaxation levels, wrinkle levels, and electrical conductivities of various electrolytic copper foils measured by methods described above were listed in Table 3 below.

**Table 3**

| | Silver content (ppm) | Titanium content (ppm) | Sulfur content (ppm) | Tensile strength (kg/mm²) | Relaxation level | Wrinkle Level | Electrical conductivity (%IACS) |
|---|---|---|---|---|---|---|---|
| E1 | 5.1 | 0.6 | 19 | 74.9 | 1 | A | 83.7 |
| E2 | 14.6 | 2.8 | 18 | 78.6 | 0 | A | 83.2 |
| E3 | 19.2 | 4.7 | 20 | 74.5 | 0 | A | 83.6 |
| E4 | 5.3 | 0.7 | 16 | 64.2 | 1 | A | 85.9 |
| E5 | 14.4 | 2.5 | 21 | 67.8 | 0 | A | 85.6 |
| E6 | 19.5 | 4.9 | 19 | 64.3 | 0 | A | 86.7 |
| E7 | 19.5 | 4.9 | 66 | 77.5 | 0 | A | 83.3 |
| E8 | 14.6 | 2.8 | 8 | 62.6 | 0 | A | 86.1 |
| E9 | 14.6 | 2.2 | 19 | 69.8 | 0 | A | 85.3 |
| E10 | 13.9 | 2.6 | 22 | 65.8 | 0 | A | 85.9 |
| E11 | 14.8 | 3.0 | 19 | 52.6 | 0 | B | 93.2 |
| E12 | 24.1 | 7.3 | 21 | 51.3 | 0 | B | 93.8 |
| E13 | 22.6 | 6.1 | 20 | 71.2 | 0 | A | 82.5 |
| E14 | 21.5 | 5.9 | 18 | 61.9 | 0 | A | 84.2 |
| E15 | 14.6 | 2.8 | 83 | 83.6 | 0 | A | 81.8 |
| CE1 | 3.8 | 0.3 | 17 | 73.5 | 3 | C | 83.9 |
| CE2 | 3.7 | 0.4 | 19 | 62.8 | 3 | C | 86.8 |
| CE3 | 0 | 0 | 20 | 63.2 | 3 | C | 86.5 |
| CE4 | 0 | 0 | 18 | 57.6 | 3 | C | 91.3 |
| CE5 | 15.2 | 0 | 20 | 75.6 | 3 | A | 83.6 |
| CE6 | 0 | 2.9 | 19 | 64.4 | 0 | C | 85.9 |
| CE7 | 1.6 | 0.1 | 17 | 49.1 | 3 | C | 93.9 |
| CE8 | 39.0 | 10.6 | 18 | 69.5 | 0 | A | 76.9 |
| CE9 | 14.6 | 2.8 | 0 | 54.2 | 0 | C | 93.2 |

### (VII) Crack level after charge-discharge test

The present invention further applied the electrolytic copper foil in lithium ion secondary batteries, and the method of preparing the lithium ion secondary battery was as following. A positive electrode slurry was prepared by using N-polyvinylpyrrolidone (NMP) as a solvent and positive electrode materials in Table 4 below in a solid-liquid ratio of 195 wt% (100 g of positive electrode materials: 195 g of NMP). Additionally, a negative electrode slurry was prepared by using water as a solvent and negative electrode materials in Table 2 above in a solid-liquid ratio of 73 wt% (100 g of negative electrode materials: 73 g of water).

**Table 4**

| Formulation of the positive electrode slurry | (Based on the total weight) |
|---|---|
| Positive electrode active substance: LiCoO₂ | 89 wt% |
| Conductive aid: flake graphite (KS6) | 5 wt% |
| Conductive aid: conductive carbon powder (Super P^{®}) | 1 wt% |
| Oily adhesive: PVDF1300 | 5 wt% |

The positive electrode slurry was coated on an aluminum foil and a negative electrode slurry was coated on the electrolytic copper foil sample, and then the foils were dried in an oven at 160°C to evaporate the solvents and rolled with a rolling machine (in which the roller was made of high carbon chromium bearing steel (SUJ2)) at a rate of 1 m/min and a pressure of 3000 psi. The foils were slit to certain sizes to prepare positive electrode and negative electrode pieces. The negative electrode piece was baked in an oven at 140°C for 5 hours to remove water before being assembled into a lithium ion secondary battery. The positive electrode piece, a separator (Celgard^{®}), and the negative electrode piece were wound together and placed in a container, and then the container was charged with an electrolytic solution and sealed (the specification of the battery was general cylindrical 18650). The prepared lithium ion secondary battery was charged and discharged repeatedly 300 times under the following charge-discharge condition, and then the lithium ion secondary battery was disassembled and visually inspected for the crack level in the electrolytic copper foil. It was labeled as "A" if there was no crack; it was labeled as "B" if a few cracks appeared; and it was labeled as "C" if obvious or a plurality of cracks occurred. The results were shown in Table 5.
Electrolytic solution: 1M lithium hexafluorophosphate (LiPF₆) and 2wt% vinylene carbonate (VC) added in a mixture of ethylene carbonate (EC) and ethyl methyl carbonate (EMC) at a volume ratio of 1:2,
Charge-discharge condition:
Room temperature (25°C)
Charging in a constant current and constant voltage (CCCV) mode at a charging voltage of 4.2 V and a charging current of 1 C
Discharging in a constant current (CC) mode at a discharging voltage of 2.8 V and a discharging current of 1 C

**Table 5**

| | Crack Level |
|---|---|
| E1 | A |
| E2 | A |
| E3 | A |
| E4 | A |
| E5 | A |
| E6 | A |
| E7 | A |
| E8 | A |
| E9 | A |
| E10 | A |
| E11 | A |
| E12 | A |
| E13 | B |
| E14 | B |
| E15 | B |
| CE1 | A |
| CE2 | A |
| CE3 | A |
| CE4 | A |
| CE5 | A |
| CE6 | A |
| CE7 | A |
| CE8 | C |
| CE9 | A |

It can be seen from the results described above, by controlling contents of silver, titanium and sulfur elements, the electrolytic copper foil of the present disclosure exhibited superior effects including high electrical conductivity, resistance to relaxation, and reduced tendency to develop wrinkles after being coated with active materials. Also, when applied to lithium ion secondary batteries, the electrolytic copper foil was not prone to developing cracks even after the battery undergoes repeated charge-discharge cycles. In contrast, in Comparative Examples 1 to 4, 6, and 7 the silver content was too low, causing the copper foil coated with an active material to develop wrinkles easily. In Comparative Example 8, the sum of the silver and titanium content was too high, resulting in electrical conductivity below 80% IACS. In Comparative Examples 1 to 5 and 7, the titanium content was too low, causing the copper foils to relax easily. Finally, in Comparative Example 9, the copper foil had too low sulfur content, causing the copper foil coated with an active material to develop wrinkles easily.

## Claims

1. A copper foil, comprising 5 ppm to 25 ppm of silver, 0.5 ppm to 8 ppm of titanium and 5 ppm to 85 ppm of sulfur.

2. The copper foil of claim 1, comprising 5 ppm to 20 ppm of silver.

3. The copper foil of claim 1, comprising 0.5 ppm to 5 ppm of titanium.

4. The copper foil of claim 1, comprising 5 ppm to 70 ppm of sulfur.

5. The copper foil of claim 1, having a tensile strength ranging from 45 kg/mm² to 85 kg/mm².

6. The copper foil of claim 1, having a tensile strength ranging from 60 kg/mm² to 80 kg/mm².

7. The copper foil of claim 1, having an electrical conductivity of 80% IACS or more.

8. The copper foil of claim 1, having a first surface and an opposite second surface, wherein the first and second surfaces of the copper foil respectively have a ten-point mean roughness (Rz) of 2.5 µm or less.

9. The copper foil of claim 1, having an elongation of 1% to 15%.

10. The copper foil of claim 1, having a thickness of 3 µm to 35 µm.

11. The copper foil of claim 1, comprising a copper layer and a treatment layer.

12. The copper foil of claim 11, wherein the treatment layer is formed on at least one surface of the copper layer, and the treatment layer is formed from an organic material or an inorganic material.

13. The copper foil of claim 12, wherein the inorganic material comprises at least one selected from the group consisting of chromium, nickel, zinc, cobalt, manganese, and tin.

14. The copper foil of claim 12, wherein the organic material comprises at least one selected from the group consisting of carbon, oxygen, nitrogen, sulfur, and silicon.

15. The copper foil of claim 12, wherein the organic material comprises at least one selected from the group consisting of porphyrin compounds, silane compounds, benzotriazole compounds, and triazine trithiol compounds.

16. A current collector for a lithium ion secondary battery, comprising the copper foil of any one of claims 1-15.

17. A lithium ion secondary battery, comprising the current collector of claim 16.
